(19) **Europäisches Patentamt / European Patent Office / Office européen des brevets**

(11) **EP 3 182 343 A1**

(12) **DEMANDE DE BREVET EUROPEEN**

(43) Date de publication:
**21.06.2017 Bulletin 2017/25**

(51) Int Cl.:
*G06Q 10/04* (2012.01)   *G06Q 50/06* (2012.01)
*F24D 19/10* (2006.01)   *F24J 2/00* (2014.01)
*H02J 3/00* (2006.01)

(21) Numéro de dépôt: **16202190.1**

(22) Date de dépôt: **05.12.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **17.12.2015 FR 1562620**

(71) Demandeur: **COMMISSARIAT À L'ÉNERGIE ATOMIQUE ET AUX ÉNERGIES ALTERNATIVES 75015 Paris (FR)**

(72) Inventeurs:
• **LOMET, Aurore**
  **91191 Gif-sur-Yvette Cedex (FR)**
• **SUARD, Frédéric**
  **91191 Gif-sur-Yvette Cedex (FR)**
• **CHEZE, David**
  **73375 Le Bourget du Lac (FR)**

(74) Mandataire: **HAMMES, Pierre et al Marks & Clerk France Immeuble Visium 22, avenue Aristide Briand 94117 Arcueil Cedex (FR)**

(54) **METHODE DE PREVISION DE LA CONSOMMATION D'EAU CHAUDE, METHODE ET SYSTEME D'OPTIMISATION DE LA PRODUCTION D'EAU CHAUDE**

(57)     Méthode de prévision de la consommation d'eau chaude d'une résidence équipée d'un réservoir d'eau chaude comprenant :
• une première prévision (201) de la variabilité de la consommation d'eau chaude intra-journalière, pour chaque jour de la semaine, comprenant la recherche d'un modèle de prévision qui présente une erreur minimale avec une mesure normalisée de consommation cumulée moyenne sur une durée d'apprentissage, ledit modèle de prévision étant déterminé à l'aide d'une somme d'une pluralité de fonctions locales,
• une deuxième prévision (202) de la consommation d'eau chaude journalière,
• une troisième prévision (203) de la consommation d'eau chaude intra-journalière, pour chaque jour de la semaine, à partir d'une combinaison de la première prévision et de la deuxième prévision.

FIG.2

EP 3 182 343 A1

**Description**

L'invention concerne le domaine de l'optimisation de la consommation d'eau chaude sanitaire pour des résidences équipées de ballons d'eau. L'invention peut également s'appliquer à tout bâtiment à vocation tertiaire ou à tout bâtiment collectif. L'invention entre dans le cadre général des solutions au problème de réduction des dépenses énergétiques liées au chauffage de l'eau sanitaire.

L'invention porte sur une méthode particulière de prévision de la consommation d'eau chaude ainsi qu'une méthode et un système d'optimisation de la production d'eau chaude utilisant le modèle de prévision particulier généré selon l'invention.

L'invention vise à résoudre le problème particulier du contrôle et de la réduction du coût énergétique lié au chauffage de l'eau pour des réservoirs d'eau chaude du type ballons d'eau. Pour cela, l'invention vise à fournir une solution de contrôle de la production d'eau chaude.

Les solutions existantes de production d'eau chaude pour des résidences équipées de ballons d'eau sont généralement basées sur un réservoir d'eau chaude de taille prédéterminée, variable typiquement de 100 à 200 litres pour un usage domestique, dont le volume total d'eau est chauffé à une température cible (typiquement de l'ordre de 50°C) pendant les heures creuses de la journée.

La quantité d'eau chauffée est cependant rarement utilisée en totalité et les déperditions de chaleur au cours de la journée impliquent des apports énergétiques considérables pour maintenir l'eau à une température supérieure à un seuil fixé.

Une solution générale à ce problème consiste à tenter de prédire la consommation d'eau chaude sanitaire afin d'utiliser cette prévision pour ne chauffer que la quantité d'eau nécessaire, conformément à la prévision.

L'invention s'inscrit dans ce cadre et propose une solution de prévision particulière.

La prévision de la consommation d'eau chaude sanitaire est principalement utilisée dans le domaine de l'énergie pour l'optimisation des ressources et des coûts énergétiques comme décrit dans le document CN 100520190 C. Dans ce document, l'objectif est de réaliser des économies par la prévision de la consommation d'eau chaude sanitaire dans les hôtels, les restaurants, les écoles ou bien encore les bains publics.

Cependant cette méthode ne prend que peu en compte les grandes variabilités observées lors d'une consommation individuelle et peut nécessiter des informations a priori qui ne sont pas toujours connues. En effet, la prévision de la consommation d'eau chaude sanitaire est réalisée par deux modèles qui se substituent selon le pas temporel de prévision : un modèle saisonnier de série temporelle qui est déduit un historique de données pour une prévision supérieure à l'heure et d'un modèle de régression qui prend en compte des variables externes comme les conditions climatiques pour une prévision inférieure à l'heure.

Le document EP 2793097A2 propose d'estimer la consommation d'eau chaude par extrapolation linéaire dont l'inconvénient est de ne pas prendre en compte les variabilités aléatoires de consommations individuelles.

Le document US 4775944 décrit quant à lui un système de contrôle de l'air conditionné et du chauffage de l'eau pour une ou plusieurs résidences. Ce système nécessite des informations supplémentaires comme des données météorologiques qui sont obtenues par des capteurs installés près des logements. La méthode est donc très locale et requiert différentes ressources (comme des capteurs par exemple).

Le document US 6098893 A propose une méthode de contrôle qui vise à pallier ce problème de zones géographiques restreintes mais qui nécessite toujours de nombreuses informations a priori.

Le document US 2015/0226460 A1 propose d'estimer en temps réel la consommation d'eau chaude d'une résidence munie d'un ballon d'eau chaude à partir de plusieurs informations : la dimension du ballon, les relevés des capteurs de température à l'entrée et la sortie du ballon et les usages des résidents. Cependant il ne propose pas de prévision pouvant être utilisée pour piloter directement la production d'eau chaude.

Plusieurs autres types de modélisation de consommation d'eau chaude sanitaire ont été proposés tels que les modèles de produits de probabilités ([1]), de régression ([2]) ou bien encore des réseaux de neurones ([3]). Cependant, la plupart de ces modèles ont besoin en entrée d'informations a priori sur les habitants ou le type d'installation qui ne sont pas toujours disponibles et dont on souhaite s'affranchir pour garantir la généricité de l'approche. Une autre méthode ([4]) se base quant à elle sur des moyennes mobiles calculées à partir des jours de la semaine correspondant pendant les deux mois antérieurs. Bien que ce modèle propose une prévision de la consommation à la minute, ce modèle ne permet pas de prendre en compte les fluctuations aléatoires des résidences particulières.

La présente invention a pour but de pallier les problèmes précédemment cités par une méthode de prévision de la consommation d'eau chaude sanitaire réalisée sans connaissance a priori sur les spécificités des résidences ou des habitants. L'invention permet de prendre en compte les fluctuations aléatoires, et permet d'embarquer le modèle de prévision au sein d'un dispositif de contrôle du chauffage de l'eau. Le modèle de prévision selon l'invention est, de ce fait, uniquement déduit d'un historique de données (le débit en litre consommé) collecté pendant une période d'observation, flexible pour s'adapter aux différents profils de consommation suivant les résidences. L'invention permet de prendre également en compte les variabilités de consommation selon les jours de la semaine en incluant les phénomènes épisodiques tels que les congés et les jours fériés. La prévision fournie par la méthode selon l'invention permet d'estimer non seulement le volume total consommé dans une journée, mais également le profil de variation de la consommation tout au long de la journée. En outre la mise en oeuvre de l'invention nécessite peu de ressources de calculs.

L'invention a pour objet une méthode, mise en oeuvre par ordinateur, de prévision de la consommation d'eau chaude d'une résidence équipée d'un réservoir d'eau chaude, selon la revendication 1.

Selon un aspect particulier de l'invention, le modèle de prévision de la variabilité de la consommation d'eau chaude intra-journalière est déterminé à l'aide d'une somme d'une pluralité de fonctions sigmoïdes.

Selon un aspect particulier de l'invention, la fonction sigmoïde est de la forme $f(t) = \dfrac{\gamma}{1 + \exp(\alpha.t + \beta)}$ , $\alpha$, $\beta$ et $\gamma$ étant des paramètres de la fonction.

Selon un aspect particulier de l'invention, la recherche d'un modèle de prévision de la variabilité de la consommation d'eau chaude intra-journalière comprend la recherche du nombre de fonctions locales et des paramètres des fonctions locales qui permettent de minimiser l'erreur entre le modèle de prévision et la mesure normalisée de consommation cumulée moyenne.

Selon un aspect particulier de l'invention, la deuxième prévision de la consommation d'eau chaude journalière comprend la recherche d'un modèle autorégressif à moyenne mobile ARMA.

Selon un aspect particulier de l'invention, les paramètres du modèle autorégressif à moyenne mobile sont déterminés par estimation du maximum de vraisemblance à partir d'une pluralité de mesures de la consommation d'eau chaude journalière réalisées sur une durée d'apprentissage.

Selon un aspect particulier de l'invention, le modèle autorégressif à moyenne mobile comprend une composante autorégressive d'ordre égal à sept et une composante à moyenne mobile d'ordre égal à sept.

Selon un mode de réalisation particulier, la méthode de prévision selon l'invention comprend en outre l'établissement d'une pluralité de modèles types de consommation d'eau chaude intra-journalière comprenant :

- une classification des mesures de consommation cumulée d'eau chaude intra-journalière effectuées sur une période d'apprentissage,
- pour chaque classe, la détermination d'un profil de consommation moyen.

Selon un aspect particulier de l'invention, la classification des mesures utilise une métrique basée sur un produit scalaire normalisé.

Selon un aspect particulier de l'invention, la classification des mesures est réalisée à l'aide d'un algorithme de partitionnement de données basé sur différentes densités spatiales, par exemple un algorithme du type DBSCAN.

Selon un mode de réalisation particulier, la méthode de prévision selon l'invention comprend en outre une phase de réajustement de la troisième prévision comprenant, à une pluralité d'instants donnés pendant une journée, la mesure de la consommation d'eau chaude cumulée depuis le début de la journée et la recherche, parmi la troisième prévision et le profil de consommation moyen de chaque classe de mesures, du modèle de consommation le plus proche de ladite mesure pour réajuster la troisième prévision.

Selon un mode de réalisation particulier, la méthode de prévision selon l'invention comprend le réajustement de la troisième prévision par le modèle de consommation le plus proche de ladite mesure pour la période de la journée postérieure à l'instant de mesure.

Selon un mode de réalisation particulier, la méthode de prévision selon l'invention comprend le réajustement du volume d'eau chaude consommé selon la troisième prévision à partir du volume d'eau chaude consommé mesuré.

L'invention a également pour objet un produit programme d'ordinateur téléchargeable depuis un réseau de communication et/ou stocké sur un support lisible par ordinateur comportant des instructions de code de programme pour l'exécution de la méthode de prévision de la consommation d'eau chaude selon l'invention, lorsque le programme est exécuté par un processeur.

L'invention a également pour objet un support d'enregistrement lisible par un processeur sur lequel est enregistré un programme comportant des instructions de code de programme pour l'exécution de prévision de la consommation d'eau chaude selon l'invention, lorsque le programme est exécuté par un processeur.

L'invention a également pour objet une méthode de production d'eau chaude pour une résidence équipée d'un réservoir d'eau chaude comprenant la production d'un volume d'eau chaude conformément à une prévision de consommation d'eau chaude élaborée à l'aide de la méthode de prévision de la consommation d'eau chaude selon l'invention.

Selon un aspect particulier de l'invention, la production d'un volume d'eau chaude comprend l'activation ou la désactivation du chauffage de l'eau en fonction d'une comparaison, au cours du temps, entre une énergie équivalente stockée dans le réservoir d'eau chaude et une énergie équivalente prédite à partir de la prévision de consommation d'eau chaude.

Selon un aspect particulier de l'invention, la production d'un volume d'eau chaude comprend les étapes suivantes, exécutées itérativement :

- Effectuer au moins une mesure de température à l'intérieur du réservoir d'eau chaude,
- Calculer une énergie équivalente stockée au moins à partir de ladite au moins une mesure de température et d'une température de consigne,
- Calculer une énergie équivalente prédite à partir de la prévision de consommation d'eau chaude,
- Calculer la différence entre l'énergie équivalente stockée et l'énergie équivalente prédite et,

  - Si la différence est négative ou nulle, activer le chauffage de l'eau du réservoir,
  - Si la différence est positive, désactiver le chauffage de l'eau du réservoir.

Selon un aspect particulier de l'invention, la production d'un volume d'eau chaude comprend en outre les étapes de :

- Si la différence calculée est positive, vérifier si le chauffage de l'eau du réservoir est activé et,
- Si le chauffage de l'eau est activé et si la différence calculée est supérieure à un niveau d'énergie minimum, désactiver le chauffage de l'eau du réservoir.

L'invention a encore pour objet un système de production d'eau chaude comprenant un réservoir d'eau chaude, une mémoire contenant un modèle de prévision de consommation d'eau chaude intra-journalière, pour chaque jour de la semaine, obtenu par l'exécution de la méthode de prévision de la consommation d'eau chaude selon l'invention, un moyen de chauffage de l'eau dudit réservoir configuré pour chauffer une quantité d'eau prédéterminée à partir dudit modèle de prévision de consommation d'eau chaude.

Selon un aspect particulier de l'invention, le moyen de chauffage de l'eau comprend au moins un dispositif de chauffage de l'eau, au moins un capteur de température de l'eau contenue dans le réservoir et un dispositif de pilotage ayant accès à la mémoire et étant configuré pour mettre en oeuvre la méthode de production d'eau chaude selon l'invention.

Selon un mode de réalisation particulier, le système de production d'eau chaude selon l'invention comprend en outre un dispositif de mesure de l'eau chaude consommée dans ledit réservoir et un dispositif de réajustement du modèle de prévision de consommation d'eau chaude contenu dans la mémoire, configuré pour exécuter la méthode de prévision de la consommation d'eau chaude selon l'invention.

D'autres caractéristiques et avantages de la présente invention apparaîtront mieux à la lecture de la description qui suit en relation aux dessins annexés qui représentent :

- La figure 1, un schéma d'un système d'optimisation de production d'eau chaude sanitaire selon l'invention,
- La figure 2, un organigramme détaillant les étapes de la méthode de prévision de la consommation d'eau chaude selon un premier mode de réalisation de l'invention,
- La figure 3a, un exemple de diagramme de consommation d'eau chaude moyenne cumulée pour chaque jour de la semaine,
- La figure 3b, un exemple de diagramme de consommation d'eau chaude moyenne cumulée et normalisée pour chaque jour de la semaine,
- La figure 4, un organigramme détaillant les étapes de la méthode de prévision de la consommation d'eau chaude selon un second mode de réalisation de l'invention,
- La figure 5, un organigramme détaillant les étapes de mise en oeuvre d'un exemple d'algorithme de pilotage.

L'invention s'applique au domaine de la production d'eau chaude sanitaire, par l'intermédiaire d'un réservoir d'eau chaude tel qu'un ballon.

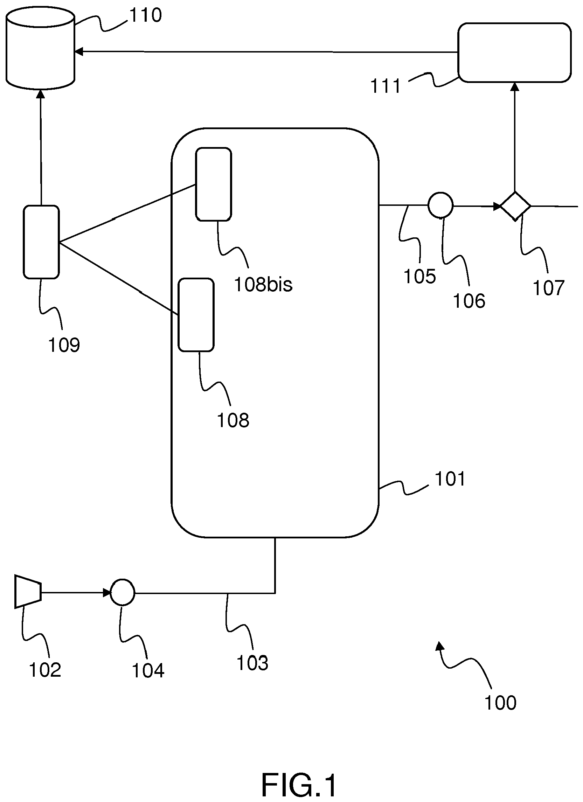

La figure 1 détaille un exemple de système 100 de production d'eau chaude compatible de la mise en oeuvre de l'invention. Le système 100 est représenté sur la figure 1 de façon schématique avec un objectif d'identifier les éléments nécessaires à la mise en oeuvre de l'invention. Chaque élément identifié sur la figure 1 peut prendre différentes formes de réalisation comme cela est explicité par la suite. Par ailleurs, le système 100 peut également comprendre d'autres éléments non représentés sur la figure.

Un tel système 100 comporte notamment un réservoir d'eau chaude 101, encore appelé ballon d'eau chaude, pour stocker un volume d'eau prédéterminé (selon la capacité du réservoir) et un dispositif de chauffage de l'eau 108 pour chauffer totalement ou partiellement l'eau contenue dans le réservoir. Le dispositif de chauffage 108 peut prendre différentes formes selon la source d'énergie utilisée pour chauffer l'eau. La source d'énergie utilisée peut notamment être de l'électricité, du gaz naturel, du propane ou une source d'énergie solaire. Ainsi, le dispositif de chauffage 108 peut prendre la forme d'une pompe à chaleur, d'un panneau solaire, d'une alimentation électrique ou de tout autre moyen de chauffage connu de l'Homme du métier. Plusieurs dispositifs de chauffage 108 différents ou identiques peuvent être combinés pour concevoir un système utilisant des sources d'énergie multiples.

Le système 100 comporte également une conduite d'arrivée d'eau froide 103 pour acheminer l'eau depuis une source d'eau froide 102. Un capteur de température 104 peut être positionné sur la conduite d'arrivée d'eau 103 pour mesurer la température de l'eau entrant dans le réservoir 101. Le système 100 comporte également une conduite de sortie d'eau chaude 105 pour acheminer l'eau chauffée vers différents équipements d'une résidence. Typiquement, la conduite de sortie d'eau chaude 105 est disposée plutôt dans la partie haute du réservoir 101 où l'eau chaude est présente. Un capteur de température 106 peut être positionné sur la conduite de sortie d'eau chaude 105 afin de mesurer la température de l'eau chauffée.

Le système de production d'eau chaude sanitaire selon l'invention est adapté en ce qu'il comporte en outre un dispositif de mesure 107 du volume d'eau chaude consommé par la résidence. Le dispositif de mesure 107 peut prendre la forme d'un débitmètre qui mesure la consommation d'eau chaude par unité de temps, par exemple par heure ou par minute. Le débitmètre peut également être asynchrone et effectuer des mesures par unité de volume consommé, par exemple par pas d'un litre. Dans ce cas, les mesures de consommation sont incrémentées de la même valeur pour chaque mesure successive (par exemple un litre) mais c'est l'instant de mesure qui varie. Le dispositif de mesure 107 peut être positionné sur la conduite de sortie d'eau chaude 105, comme représenté sur la figure 1, ou sur la conduite d'arrivée d'eau 103. Le système 100 selon l'invention comporte également un dispositif 109 de pilotage du dispositif de chauffage 108 configuré pour appliquer une consigne de chauffage au dispositif 108 de sorte à chauffer un volume prédéterminé d'eau chaude.

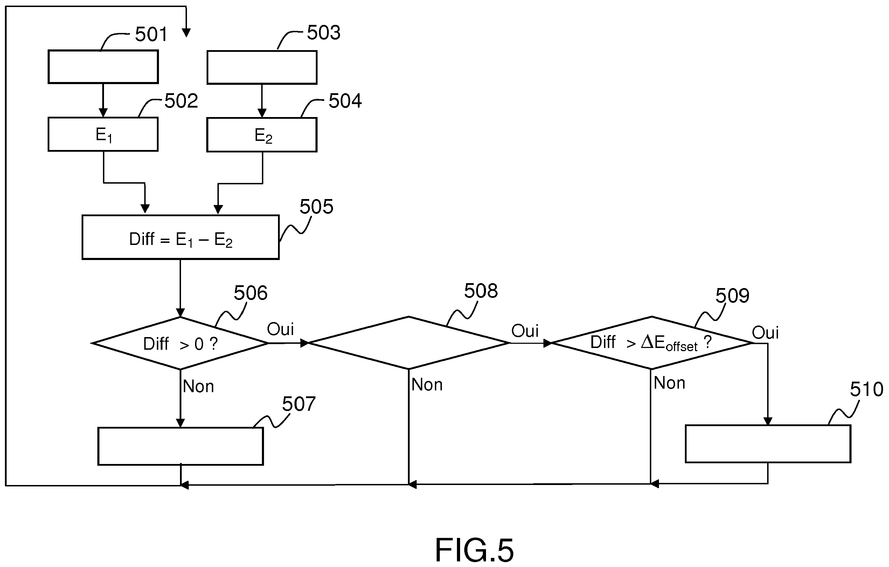

La consigne de chauffage peut, par exemple, se traduire par une consigne de température à atteindre dans le réservoir 101. Pour mesurer cette consigne de température, le système 100 peut comporter également un ou plusieurs capteurs de température 108bis positionnés en un ou plusieurs endroits du réservoir 101. Si plusieurs capteurs de température sont utilisés, ils sont avantageusement positionnés à différentes hauteurs du réservoir 101. Un exemple d'algorithme pour piloter une consigne de chauffage à partir de la prévision fournie par l'invention est explicité plus en détail à la fin de la description et à l'appui de la figure 5.

Selon l'invention, le système 100 comporte également une mémoire 110 pour stocker un ou plusieurs modèles de prévision de consommation d'eau chaude sanitaire. La mémoire 110 peut également sauvegarder une partie ou l'intégralité des mesures historiques de consommation. Le dispositif de pilotage 109 est apte à accéder à la mémoire 110 en lecture pour lire le modèle de prévision et en déduire la consigne de chauffe. La communication entre la mémoire 110 et le dispositif de pilotage 109 peut se faire par tout moyen de communication connu filaire ou sans fil. Le dispositif de pilotage 109 et le dispositif de chauffage 108 peuvent également être intégrés ensemble en un seul et même dispositif.

Selon un mode de réalisation particulier, le système 100 peut également comprendre un dispositif de calcul 111 recevant des mesures de consommation produites par le dispositif de mesure 107 et étant apte à accéder en écriture à la mémoire 110 pour modifier un modèle de prévision sauvegardé. La communication entre la mémoire 110 et le dispositif de calcul 111 peut également se faire par tout moyen de communication connu filaire ou sans fil.

Le dispositif de pilotage 109 et le dispositif de calcul 111 peuvent être implémentés sous une forme logicielle et/ou matérielle. Ils peuvent notamment être mis en oeuvre par un dispositif comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

On décrit à présent la méthode de prévision de consommation d'eau chaude sanitaire selon l'invention.

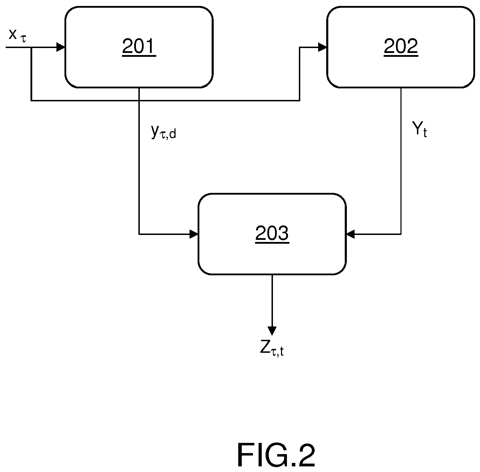

Selon un premier mode de réalisation, la méthode de prévision de consommation d'eau chaude sanitaire selon l'invention comprend principalement trois étapes comme illustré à la figure 2.

Une première étape 201 a pour objectif l'élaboration d'une prévision de la variabilité de la consommation d'eau chaude cumulée dans une journée, pour chaque jour de la semaine. Autrement dit, le but de la première étape 201 est de fournir une prévision de la variabilité de la consommation d'eau chaude intra-journalière. Cette première prévision est notée par la suite $y_{\tau,d}$ et dépend du jour de la semaine indicé par l'indice d (variant de 1 à 7) et du temps $\tau$ exprimé par exemple en heures ou en minutes et variant de 0 à 1 journée.

Une deuxième étape 202 a pour objectif l'élaboration d'une prévision de la consommation d'eau chaude journalière. Cette deuxième prévision est notée $Y_t$ et dépend uniquement du temps t exprimé en jours. La deuxième étape 202 a pour but de fournir une prévision du volume d'eau chaude consommé par jour, quel que soit le jour de la semaine.

Une troisième étape 203 consiste à combiner la première prévision et la deuxième prévision afin de fournir une troisième prévision $Z_{\tau,t} = Y_t^* \, y_{\tau,d}$ représentative de la consommation d'eau chaude quel que soit le jour de la semaine et l'instant de la journée.

On décrit tout d'abord la mise en oeuvre de la première étape 201 d'élaboration de la prévision intra-journalière $y_{\tau,d}$.

La prévision intra-journalière $y_{\tau,d}$ est déterminée sur la base d'une périodicité d'une semaine, autrement dit elle est déterminée indépendamment pour chaque jour de la semaine. Ce choix est basé sur une observation faite sur des données réelles qui a permis d'identifier une corrélation entre les profils de consommation associés aux mêmes jours de la semaine.

Pour contourner les problèmes d'irrégularité de la consommation au cours de la journée, au sens des déphasages temporels possibles, on considère un profil cumulatif journalier pour la modélisation de la forme de la consommation.

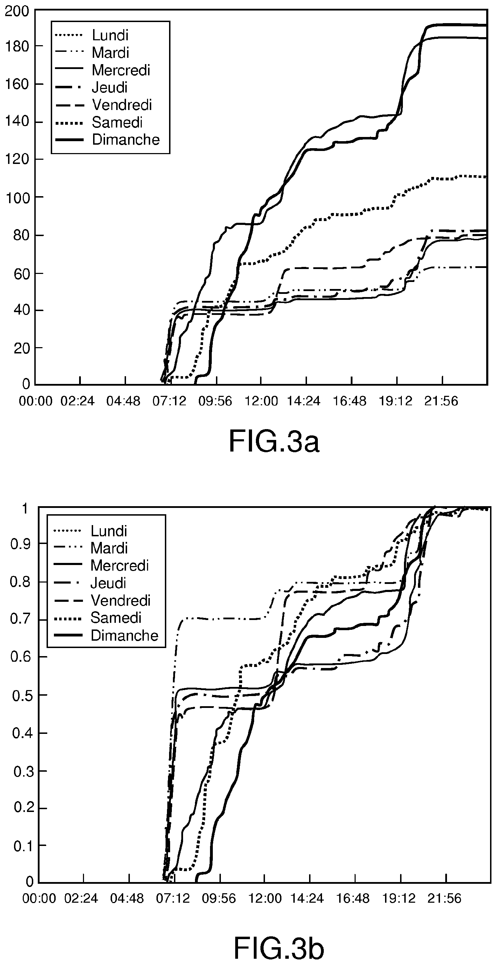

La figure 3a représente un ensemble de mesures de consommation d'eau chaude cumulée sur une journée pour différents jours de la semaine. L'abscisse représente les heures de la journée et l'ordonnée représente la consommation exprimée en litres.

Sur la figure 3a, on a représenté des profils cumulatifs moyens mesurés sur une période d'observation de 3 mois pour une résidence donnée.

L'observation du graphique de la figure 3a permet d'identifier un profil de variation particulier de la consommation cumulée pour chaque jour de la semaine. Sur l'exemple de la figure 3a, lundi et jeudi correspondent à un profil de consommation similaire qui comprend une première consommation vers 7h du matin, une deuxième consommation moins importante autour de midi et une dernière consommation à 19 heures. Mercredi, samedi et dimanche présentent des profils de consommation différents avec un plus grand nombre de sauts et un volume final plus élevé. Généralement, chaque résidence a des profils variés mais qui présentent le plus souvent entre 2 et 5 sauts entre le matin, à midi et en fin de journée.

L'observation des mesures illustrées par le graphique de la figure 3a conduit à proposer un modèle de prévision de la consommation intra journalière cumulée qui est basé sur une somme de fonctions locales qui permettent de modéliser les « sauts » de consommation identifiés sur chaque profil intra-journalier au cours de la journée.

Les fonctions locales utilisées peuvent être de différents types. Une fonction créneau peut être envisagée car elle permet de modéliser l'amplitude de chaque saut ainsi que le décalage temporel entre chaque saut. Un autre choix de fonction locale est la fonction racine, par exemple la fonction racine carrée ou la fonction racine cubique.

Un choix avantageux de fonction locale est la fonction sigmoïde car elle permet, en plus de l'amplitude et du décalage temporel, de modéliser la vitesse de consommation pour chaque saut correspondant à un épisode de consommation.

La fonction sigmoïde est de la forme $f(t) = \dfrac{\gamma}{1 + \exp(\alpha.t + \beta)}$ , $\alpha$, $\beta$ et $\gamma$ étant des paramètres de la fonction. Le paramètre $\alpha$ permet de modéliser la vitesse de consommation. Le paramètre $\beta$ permet de modéliser le décalage temporel entre deux épisodes de consommation. Le paramètre $\gamma$ permet de modéliser l'amplitude de chaque épisode de consommation.

De façon générale, la première prévision 201 intra-journalière peut être obtenue par un modèle de la forme

$$y_{\tau,d} = \frac{1}{V_d} \sum_{i=1}^{n} f_i(\tau),$$ avec $f_i(\tau)$ une fonction locale prise parmi les exemples précités. $V_d$ est le volume total consommé dans une journée. Le modèle de la première prévision 201 est normalisé afin de faire ressortir uniquement les variations de consommation au sein d'une journée. La prévision de la consommation absolue du volume d'eau chaude par jour fait l'objet de la deuxième prévision 202 décrite plus en détail ultérieurement.

La figure 3b représente un exemple de profils de consommation moyenne cumulée et normalisée pour chaque jour de la semaine. Après normalisation, la consommation cumulée varie entre 0 et 1, quel que soit le jour de la semaine.

Sans sortir du cadre de l'invention, d'autres fonctions locales $f_i(\tau)$ peuvent être envisagées dans la mesure où elles permettent de modéliser des épisodes de consommation d'eau chaude cumulée au sein d'une journée.

Le modèle de prévision intra-journalière déterminé à l'étape 201 est obtenu en recherchant les paramètres du modèle qui permettent de minimiser une erreur calculée entre ce modèle et une mesure de consommation moyenne telle que celle illustrée sur l'exemple de la figure 3b. Pour cela, des mesures de consommation $x_\tau$ effectuées pendant une période d'apprentissage, à un rythme donné, sont fournies en entrée de l'étape 201. Ces mesures peuvent être obtenues par exemple, à l'aide d'un débitmètre relié en sortie d'un réservoir d'eau chaude qui équipe une résidence.

Les paramètres du modèle comprennent d'une part le nombre n de fonctions locales impliquées dans la somme et d'autre part les paramètres de chaque fonction locale, par exemple les paramètres $\alpha$, $\beta$ et $\gamma$ pour une fonction sigmoïde.

L'erreur entre le modèle et la mesure de consommation moyenne, pour chaque jour de la semaine, peut être déterminée par une méthode de minimisation basée sur les moindres carrés ou toute autre méthode de résolution numérique faisant partie des connaissances générales de l'Homme du métier.

Un avantage de la prévision déterminée à l'issue de l'étape 201 de la méthode selon l'invention est qu'elle permet de modéliser le profil de consommation moyen pour chaque jour de la semaine et ainsi de prendre en compte les différences d'habitude de consommation entre chaque jour de la semaine pour une résidence donnée.

On décrit à présent la mise en oeuvre de la deuxième étape 202 de prévision de la consommation d'eau chaude journalière.

Selon une première variante du premier mode de réalisation de l'invention, la deuxième étape 202 peut simplement consister à affecter une valeur arbitraire à la prévision de consommation d'eau chaude journalière. Par exemple, cette valeur peut être prise égale à une moyenne de consommation mesurée sur une période donnée comprenant plusieurs jours.

Selon une seconde variante du premier mode de réalisation de l'invention, la prévision de consommation d'eau chaude journalière peut être modélisée, sans informations préalables sur les résidents, via des séries temporelles tolérantes à quelques données manquantes.

Un modèle de prévision peut ainsi être établi à partir de mesures $x_t$ du volume d'eau chaude sanitaire consommé dans une journée, pour une période d'apprentissage comprenant plusieurs jours. La durée de cette période doit être suffisamment longue pour pouvoir observer certains phénomènes non réguliers tels que l'absence d'un résident due à des congés, des phénomènes saisonniers ou d'autres évènements épisodiques. La durée de la période d'apprentissage peut être paramétrée en fonction de la résidence visée et du comportement a priori des résidents. Une valeur possible de la durée de la période d'apprentissage est 3 mois.

Les mesures de consommation d'eau chaude peuvent être produites à l'aide d'un débitmètre relié au réservoir d'eau chaude.

Les mesures observées à l'issue de la période d'apprentissage constituent des observations suivant une composante temporelle à temps discret qui peuvent être exprimées mathématiquement à l'aide d'un processus autorégressif à moyenne mobile du type ARIMA (Auto Regressive Integrated Moving Average). Ce processus est utilisé pour analyser le comportement des observations pendant la période d'apprentissage afin de prévoir le comportement futur.

Les observations réalisées montrent que les données sont stationnaires sur la période d'apprentissage, autrement dit la moyenne de consommation est sensiblement constante. En outre les données présentent une périodicité fixe. Pour cette raison, on choisit d'utiliser un processus autorégressif à moyenne mobile fixe du type ARMA (Auto Regressive Moving Average).

Le modèle de consommation déterminé à l'étape 202 prend ainsi la forme suivante :

$$Y_t = \sum_{i=1}^{p} \varphi_i Y_{t-i} + \sum_{j=1}^{q} \theta_j \epsilon_{t-j} + \epsilon_t + C \ (1)$$

$Y_t$ est le volume journalier à estimer en litre, $\varepsilon_{t-j}$ sont les erreurs de prévision, $(\varphi, \theta)$ sont les paramètres du modèles, C est une constante généralement égale au volume moyen par jour observé pendant la période d'apprentissage. p est l'ordre de la composante autorégressive du modèle tandis que q est l'ordre de la composante à moyenne mobile du modèle.

Les valeurs de p et q influent sur la durée du passé que l'on souhaite prendre en compte pour prédire le comportement futur.

Selon l'invention, on choisit les valeurs de p et q égales à 7 pour prendre en compte un historique d'une semaine (7 jours). Ce choix est basé sur l'observation faite que la consommation est sensiblement identique d'une semaine à l'autre (hors phénomènes épisodiques du type absences dues à des congés).

En outre, on choisit un modèle faisant intervenir uniquement les observations des deux jours antérieurs au jour courant et du jour antérieur d'une semaine au jour courant afin de simplifier le modèle.

Ainsi, dans une variante particulière, le modèle de consommation journalière déterminé à l'étape 202 de la méthode selon l'invention peut prendre la forme suivante :

$$Y_t = \varphi_1 Y_{t-1} + \varphi_2 Y_{t-2} + \varphi_7 Y_{t-7} + \theta_1 \epsilon_{t-1} + \theta_2 \epsilon_{t-2} + \theta_7 \epsilon_{t-7} + \epsilon_t + C \ (2)$$

Les paramètres $(\varphi, \theta)$ du modèle peuvent être déterminés par une résolution numérique du maximum de vraisemblance appliquée sur les données observées pendant la période d'apprentissage.

Le modèle décrit ci-dessus permet de prendre en compte les fluctuations aléatoires, les motifs similaires et les différents profils de consommation suivant le logement, la saison et le jour de la semaine.

Dans une troisième étape 203 de la méthode de prévision de consommation d'eau chaude sanitaire selon l'invention, on combine la première prévision et la deuxième prévision afin de fournir une troisième prévision $Z_{T,t} = Y_t^* y_{T,d}$ finale de la consommation d'eau chaude pour chaque jour de la semaine et pour chaque période de la journée, la période pouvant être définie en heures ou en minutes ou dans une autre unité de temps.

La prévision de consommation d'eau chaude $Z_{T,t}$ peut ensuite être utilisée lors d'une phase opérationnelle, succédant à la phase d'apprentissage, pour contrôler la quantité d'eau chaude produite au cours de la journée en fonction de la prévision.

Pour réaliser ce contrôle, l'invention propose également une méthode de production de consommation d'eau chaude conformément à la prévision établie à l'issue de la phase d'apprentissage.

Cette méthode de production peut être mise en oeuvre par un système de production d'eau chaude du type de celui décrit à la figure 1 et en particulier par le dispositif de pilotage 109 du chauffage de l'eau contenue dans le réservoir. Une quantité d'eau contenue dans le réservoir est ainsi chauffée conformément à une consigne de volume produite à partir du modèle de prévision. La mémoire 110 contient les valeurs numériques du modèle de prévision à différents instants d'une journée, par exemple toutes les heures, et pour chaque jour de la semaine. Le dispositif de pilotage 109 reçoit ou vient lire la consigne de volume mémorisée dans la mémoire et pilote le dispositif de chauffage 108 pour chauffer la quantité d'eau associée pour l'intervalle temporel (par exemple égal à une heure) suivant.

On décrit à présent un second mode de réalisation de l'invention comprenant une phase de réajustement, pendant la phase opérationnelle, de la prévision établie à l'issue de la phase d'apprentissage.

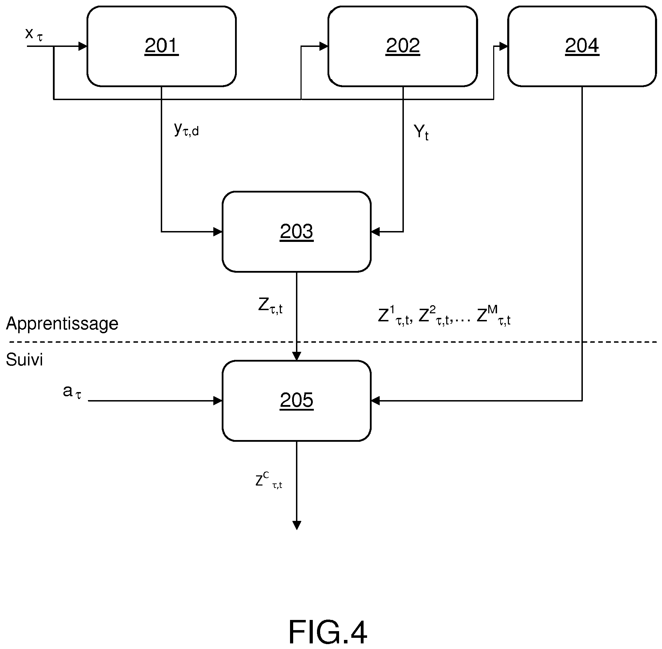

Pour cela, la méthode de prévision de consommation d'eau chaude selon l'invention est complétée avec une étape 204 de classification comme illustrée à la figure 4.

L'étape 204 de classification reçoit les mesures de consommation $x_\tau$ réalisées pendant la phase d'apprentissage, tout comme les étapes de prévision 201,202.

La prévision obtenue à l'issue de l'étape 203 correspond à un modèle périodique par jour de la semaine. Or, ce modèle peut, dans une situation opérationnelle, s'éloigner de la consommation réelle d'une résidence du fait de la variabilité de consommation individuelle qui peut s'écarter du modèle périodique. Un cas typique de rupture de la périodicité correspond aux jours fériés qui peuvent entrainer des jours de présence d'un résident en dehors des week-ends. Un autre cas de rupture concerne les variations ponctuelles du nombre d'usagers utilisant le même système de production d'eau chaude au sein d'une résidence.

Pour ajuster la tendance du modèle de prévision $Z_{\tau,t}$ obtenu à l'issue de l'étape 203, on exécute une étape 204 de classification aux mesures de consommation $x_\tau$. L'objectif de cette étape est d'obtenir un dictionnaire comprenant plusieurs profils de consommation intra-journaliers de référence $Z^1_{\tau,t}, Z^2_{\tau,t}... Z^M_{\tau,t}$ qui peuvent être par la suite comparés à la consommation observée en phase opérationnelle à différents moments de la journée.

La variable classée est constituée d'une journée d'observations de mesures de consommation d'eau chaude pour une résidence. La classification est effectuée indépendamment du jour de la semaine. L'algorithme de classification utilisé est un algorithme non supervisé, par exemple un algorithme du type DBSCAN (Density-Based Spatial Clustering of Applications with Noise) ou K-means. La distance utilisée pour comparer les observations entre elles et effectuer des regroupements par classe peut être un produit scalaire normalisé ou une distance euclidienne ou une distance absolue ou une corrélation linéaire ou encore une déformation temporelle dynamique (dynamic time wrapping en anglais).

L'objectif de la classification est de réaliser des groupes homogènes et d'éliminer les mesures aberrantes.

En prenant l'exemple de l'algorithme DBSCAN qui est un algorithme de classification basé sur la densité spatiale, la classification est effectuée sur la consommation cumulée intra-journalière définie comme une matrice $A=(x_{\delta,\tau})$ où $\delta$ est un indice qui varie sur le jour observé pendant la phase d'apprentissage et $\tau = (1, ..., 1440)$ correspond à la minute pendant la journée. Cette méthode non supervisée appartient à la famille d'algorithme de classification où les classes sont considérées comme des zones de différentes densités séparées par des zones encore moins denses qui correspondent à du bruit. L'algorithme de classification DBSCAN considère normalement deux paramètres, la distance de voisinage $\varepsilon$ et le nombre minimum de points support requis pour former une zone dense MinPts. Une matrice de distance est calculée entre les différents points de mesure à la première étape de l'algorithme. Cette matrice est définie par la distance choisie (par exemple un produit scalaire normalisé) calculée entre tous les jours observés lors de l'étape de l'apprentissage. L'algorithme est testé avec différentes valeurs de ses paramètres. On teste une distance de voisinage assez petite puis on augmente sa valeur à chaque essai pour obtenir des classes plus ou moins denses. Pour une distance de voisinage fixe, la valeur du critère MinPts est sélectionnée par validation croisée suivant un critère de qualité, par exemple le critère Silhouette. Les jours assignés à une classe sont retirés du jeu de données et on applique de nouveau l'algorithme avec une valeur de distance de voisinage plus élevée. Le processus s'arrête lorsque la dernière classe obtenue contient moins de P% des jours observés, où P est un paramètre de la méthode pris par exemple égal à 5.

Une fois l'étape de classification terminée, on obtient plusieurs classes homogènes et on calcule, pour chacune d'entre elles, un profil moyen de consommation intra-journalière cumulée. Ce profil moyen correspond à un profil type qui peut être un modèle de prévision alternatif à celui obtenu après l'étape 203 de la méthode selon l'invention.

Selon le second mode de réalisation de l'invention, la méthode de prévision aboutit ainsi à la génération de plusieurs profils de consommation types $Z^1_{\tau,t}, Z^2_{\tau,t}... Z^M_{\tau,t}$ qui viennent compléter le modèle $Z_{\tau,t}$ de prévision obtenu à l'étape 203. La phase d'apprentissage s'arrête à cette étape.

En fonctionnement opérationnel, autrement dit lorsqu'un résident utilise le système de production d'eau chaude, le modèle $Z_{\tau,t}$ de prévision peut être réajusté via une étape supplémentaire de suivi 205.

Cette étape 205 reçoit des mesures $a_\tau$ de consommation d'eau chaude cumulée à différents instants de la journée, par exemple toutes les heures. Chaque mesure $a_\tau$ est ensuite comparée d'une part au modèle de prévision principal $Z_{\tau,t}$ et d'autre part, aux profils de consommation types $Z^1_{\tau,t}, Z^2_{\tau,t}... Z^M_{\tau,t}$ obtenus à l'issue de l'étape 204. La comparaison est réalisée sur toutes les mesures $a_\tau$ effectuées depuis le début de la journée, autrement dit depuis la première mesure effectuée pour la journée courante. La comparaison se fait à l'aide d'un critère de distance identique à la distance utilisée pour réaliser la classification à l'étape 204. Si la mesure $a_\tau$ est plus proche d'un profil type que de la prévision principale, alors le modèle de prévision principal $Z_{\tau,t}$ est corrigé en remplaçant les valeurs du modèle correspondant au jour et aux instants supérieurs ou égaux à l'instant de la mesure $a_\tau$ par les valeurs correspondantes du profil type $Z^j_{\tau,t}$ retenu.

Le modèle de prévision corrigé $Z^C_{\tau,t}$ est utilisé pour piloter la production d'eau chaude pour le reste de la journée suivant l'instant $\tau$ auquel a été effectué la mesure $a_\tau$.

Le deuxième mode de réalisation de l'invention peut être mis en oeuvre par un système 100 de production d'eau chaude du type de celui de la figure 1. La mémoire 110 du système contient, en plus du modèle de prévision principal $Z_{\tau,t}$, les profils de consommation types $Z^2_{\tau,t}$... $Z^M_{\tau,t}$. L'étape 205 de la méthode, qui est exécutée pendant une phase opérationnelle, peut être mise en oeuvre par l'intermédiaire d'un dispositif de calcul 111 embarqué dans le système 100 qui reçoit en entrée les mesures $a_\tau$ de consommation réalisées par un débitmètre 107, effectue la comparaison des mesures avec les différents modèles sauvegardés en mémoire 110 et corrige le modèle de prévision principal $Z_{\tau,t}$. Ce deuxième mode de réalisation nécessite ainsi une mémoire 110 accessible en lecture et en écriture pour pouvoir corriger le modèle de prévision au fil de l'eau.

Selon une variante du deuxième mode de réalisation de l'invention, le volume d'eau chaude prévu pour une journée selon le modèle de prévision $Z_{\tau,t}$ peut également être ajusté au cours de la journée à partir des mesures de volume d'eau chaude consommée $a_\tau$ en appliquant une règle de proportionnalité pour les valeurs du modèle postérieures à l'instant de mesure $\tau$.

La figure 5 explicite, sur un organigramme, un exemple d'algorithme itératif de pilotage de consigne de chauffage à partir du modèle de prévision fourni par l'invention.

Dans une première étape 501, on effectue une ou plusieurs mesures de températures $T_i$, dans le réservoir d'eau chaude 101, par l'intermédiaire de capteurs de températures 108bis. Si plusieurs mesures sont effectuées, elles le sont via des capteurs positionnés à différentes hauteurs du réservoir car, typiquement, la température de l'eau contenue dans le réservoir 101 varie en fonction de la hauteur et selon la position de la source de chauffage 108. Par exemple, les capteurs de températures 108bis peuvent être équirépartis sur la hauteur du réservoir 101.

Dans une étape suivante 502, on calcule l'énergie équivalente stockée E1 dans le réservoir 101 à partir des mesures de températures $T_i$, i variant de 1 à n.

L'énergie équivalente stockée $E_1$ peut, par exemple, être calculée à l'aide de la relation suivante :

$$E_1 = \sum_{i=1}^{n} \rho C_p \cdot V_i \cdot 1_{\{T_i > T_{consECS} + \text{offset}\}} \cdot T_i.$$

La fonction $1_{\{T_i > T_{consECS} + \text{offset}\}}$ est une fonction conditionnelle qui vaut 1 si la condition $T_i > T_{consECS} + \text{offset}$ est respectée et 0 si cette condition n'est pas respectée.

$T_{consECS}$ est une température de consigne seuil que l'eau contenue dans le réservoir doit respecter pour être considérée comme chauffée du point de vue du système. Offset est une marge de tolérance ajoutée à la consigne de température. Une valeur typique de la consigne de température $T_{consECS}$ est égale à 45 degrés Celsius.

$V_i$ est le volume de chaque strate du réservoir associée à la mesure de température $T_i$. n est le nombre de mesures de températures et le nombre de strates du réservoir.

$C_\rho$ est la capacité thermique massique de l'eau,

$\rho$ est la masse volumique de l'eau.

Par ailleurs, dans une étape 503, on vient lire, dans la mémoire 110, la prédiction de volume d'eau chaude consommée déterminée selon l'invention. On note cette prévision $\hat{V}_{ECS,t}$, avec t l'instant associé à la prévision qui peut varier périodiquement, par pas constant, par exemple par pas d'une heure. L'instant t associé à la prévision de consommation correspond au même instant t auquel sont effectuées les mesures de température $T_i$.

Dans une étape 504, on calcule également l'énergie équivalente $E_2$ qui doit être produite pour être conforme de la prévision de consommation. Cette énergie équivalente $E_2$ à atteindre peut être déterminée, par exemple, à l'aide de la relation suivante : $E_2 = \rho C_p \cdot \hat{V}_{ECS,t} \cdot T_{consECS}$.

Une fois les étapes 502 et 504 exécutées, on passe dans une étape 505 dans laquelle on calcule la différence Diff=$E_1$-$E_2$ entre l'énergie équivalente stockée $E_1$ et l'énergie équivalente qui doit être produite $E_2$.

Dans une étape 506, on vérifie si la différence calculée à l'étape 505 est strictement positive. Si ce n'est pas le cas, cela signifie que l'énergie équivalente stockée $E_1$ est trop faible par rapport à l'énergie équivalente qui doit être produite $E_2$. Dans une étape 507, on active alors le chauffage de l'eau, via les moyens de chauffage 108, puis le processus retourne aux étapes 501 et 503.

Si la différence calculée à l'étape 505 est strictement positive, alors cela signifie que l'énergie équivalente stockée $E_1$ est suffisante pour la consommation qui doit être faite dans l'intervalle de temps courant, par rapport à la prévision réalisée selon l'invention. Dans ce cas, on passe dans une étape 508 où on vérifie si le chauffage de l'eau est activé ou non. Si le chauffage de l'eau n'est pas activé, le processus retourne aux étapes 501 et 503. Si le chauffage de l'eau est activé, on passe dans une étape 509 dans laquelle une comparaison est réalisée entre la différence Diff calculée à l'étape 505 et un niveau minimum d'énergie $\Delta E_{offset}$, la valeur de ce niveau minimum étant déterminée de sorte à assurer une réserve minimum d'énergie dans le réservoir à tout moment. Si la différence d'énergies Diff est inférieure au niveau minimum $\Delta E_{offset}$, alors le chauffage de l'eau est maintenu et le processus retourne aux étapes 501 et 503. Dans le cas contraire, on passe dans une étape 510 dans laquelle le chauffage de l'eau est désactivé, puis on retourne aux étapes 501,503.

L'algorithme décrit à l'appui de la figure 5 est itéré à une fréquence prédéterminée qui est au moins égale à la fréquence de mise à jour de la prévision de consommation dans l'étape 503.

Le paragraphe précédent et la figure 5 décrivent un exemple de méthode de pilotage de la production d'eau chaude à partir d'une prévision de consommation fournie par l'invention. Sans sortir du cadre de l'invention, d'autres méthodes de pilotage sont envisageables.

Comme explicité sur la figure 1, une méthode de production d'eau chaude à partir d'une prévision de consommation fournie par l'invention peut être implémentée dans un dispositif de pilotage 109 relié aux moyens de chauffage de l'eau 108, aux capteurs de températures 108bis et à la mémoire 110 contenant les prévisions de consommation d'eau chaude.

La méthode de prévision de consommation d'eau chaude sanitaire selon l'invention peut être implémentée en tant que produit programme d'ordinateur et peut être disponible en tant que produit programme d'ordinateur sur un support lisible par ordinateur. Le support peut être électronique, magnétique, optique ou électromagnétique. Le programme d'ordinateur peut également être téléchargeable depuis un serveur distant, par exemple téléchargeable via l'Internet.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués (*"Cloud computing"*), éventuellement selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités. Le code exécutable peut également être téléchargeable depuis un serveur distant.

Le programme d'ordinateur peut comprendre un code source, un code objet, un code source intermédiaire ou un code objet partiellement compilé ou toute autre forme d'instructions de code de programme adaptées pour mettre en oeuvre l'invention sous la forme d'un programme d'ordinateur.

Un tel programme peut présenter diverses architectures fonctionnelles. Par exemple, un programme d'ordinateur selon l'invention peut être décomposé en une ou plusieurs routines qui peuvent être adaptées à exécuter une ou plusieurs fonctions de l'invention telles que décrites précédemment. Les routines peuvent être enregistrées ensemble dans un même fichier exécutable mais peuvent également être sauvegardées dans un ou plusieurs fichiers externes sous la forme de librairies qui sont associées à un programme principal de façon statique ou dynamique. Les routines peuvent être appelées depuis le programme principal mais peuvent également comprendre des appels à d'autres routines ou sous-routines.

Tous les procédés ou étapes de procédés, programmes ou sous-programmes décrits sous la forme d'organigrammes doivent être interprétés comme correspondant à des modules, segments ou portions de code de programme qui incluent une ou plusieurs instructions de code pour implémenter les fonctions logiques et les étapes de l'invention décrites.

Références

[1] "Realistic domestic hot-water profiles in different time scales", U. Jordan, K.Vajen, v2.0, may 2001,

[2] "Energy models for demand forecasting - a review", L. Suganthi, A.A Samuel, Renewable and sustainable energy reviews, October 2011.

[3] "Modeling of the space and domestic hot-water heating energy-consumption in the residential sector using neural networks", M. Aydinalp, V. Ismet Ugursal, A.S. Fung, Applied Energy, 5 february 2004.

[4] "Advanced control strategy of a solar domestic hot water system with a segmented auxiliary heater", T. Prud'homme, D. Gillet, Energy and Buildings, 2001.

**Revendications**

1.  Méthode, mise en oeuvre par ordinateur, de prévision de la consommation d'eau chaude d'une résidence équipée d'un réservoir d'eau chaude (101) comprenant les étapes de:

    • Recevoir une pluralité de mesures de consommation d'eau chaude effectuées pendant une durée d'apprentissage,
    • Déterminer une mesure normalisée de consommation d'eau chaude cumulée moyenne sur la durée d'apprentissage à partir des dites mesures de consommation d'eau chaude,
    • Déterminer une première prévision (201) de la variabilité de la consommation d'eau chaude intra-journalière, pour chaque jour de la semaine, en recherchant un modèle de prévision qui présente une erreur minimale avec la mesure normalisée de consommation cumulée moyenne sur une durée d'apprentissage, ledit modèle de prévision étant déterminé à l'aide d'une somme d'une pluralité de fonctions locales,
    • Déterminer une deuxième prévision (202) de la consommation d'eau chaude journalière à partir desdites mesures de consommation d'eau chaude,
    • Déterminer une troisième prévision (203) de la consommation d'eau chaude intra-journalière, pour chaque jour de la semaine, à partir d'une combinaison de la première prévision et de la deuxième prévision,
    • La troisième prévision étant destinée à être utilisée pour contrôler une quantité d'eau chaude produite.

2.  Méthode de prévision de la consommation d'eau chaude selon la revendication 1 dans laquelle le modèle de prévision (201) de la variabilité de la consommation d'eau chaude intra-journalière est déterminé à l'aide d'une somme d'une pluralité de fonctions sigmoïdes.

3.  Méthode de prévision de la consommation d'eau chaude selon la revendication 2 dans laquelle la fonction sigmoïde est de la forme $f(t) = \dfrac{\gamma}{1 + \exp{(\alpha.t + \beta)}}$ , $\alpha$, $\beta$ et $\gamma$ étant des paramètres de la fonction.

4.  Méthode de prévision de la consommation d'eau chaude selon l'une des revendications 1 à 3 dans laquelle la recherche d'un modèle de prévision (201) de la variabilité de la consommation d'eau chaude intra-journalière comprend la recherche du nombre de fonctions locales et des paramètres des fonctions locales qui permettent de minimiser l'erreur entre le modèle de prévision et la mesure normalisée de consommation cumulée moyenne.

5.  Méthode de prévision de la consommation d'eau chaude selon l'une des revendications précédentes dans laquelle la deuxième prévision (202) de la consommation d'eau chaude journalière comprend la recherche d'un modèle autorégressif à moyenne mobile ARMA.

6.  Méthode de prévision de la consommation d'eau chaude selon la revendication 5 dans laquelle les paramètres du modèle autorégressif à moyenne mobile sont déterminés par estimation du maximum de vraisemblance à partir desdites mesures de consommation d'eau chaude.

7.  Méthode de prévision de la consommation d'eau chaude selon l'une des revendications 5 ou 6 dans laquelle le modèle autorégressif à moyenne mobile comprend une composante autorégressive d'ordre égal à sept et une composante à moyenne mobile d'ordre égal à sept.

8.  Méthode de prévision de la consommation d'eau chaude selon l'une des revendications précédentes comprenant en outre l'établissement (204) d'une pluralité de modèles types de consommation d'eau chaude intra-journalière comprenant :

    • une classification des mesures de consommation cumulée d'eau chaude intra-journalière effectuées sur une période d'apprentissage,

• pour chaque classe, la détermination d'un profil de consommation moyen.

9. Méthode de prévision de la consommation d'eau chaude selon la revendication 8 dans laquelle la classification des mesures utilise une métrique basée sur un produit scalaire normalisé.

10. Méthode de prévision de la consommation d'eau chaude selon l'une des revendications 8 ou 9 dans laquelle la classification des mesures est réalisée à l'aide d'un algorithme de partitionnement de données basé sur différentes densités spatiales, par exemple un algorithme du type DBSCAN.

11. Méthode de prévision de la consommation d'eau chaude selon l'une des revendications 8 à 10 comprenant en outre une phase de réajustement (205) de la troisième prévision comprenant, à une pluralité d'instants donnés pendant une journée, la mesure de la consommation d'eau chaude cumulée depuis le début de la journée et la recherche, parmi la troisième prévision et le profil de consommation moyen de chaque classe de mesures, du modèle de consommation le plus proche de ladite mesure pour réajuster la troisième prévision.

12. Méthode de prévision de la consommation d'eau chaude selon la revendication 11 comprenant le réajustement (205) de la troisième prévision par le modèle de consommation le plus proche de ladite mesure pour la période de la journée postérieure à l'instant de mesure.

13. Méthode de prévision de la consommation d'eau chaude selon l'une des revendications 11 ou 12 comprenant le réajustement (205) du volume d'eau chaude consommé selon la troisième prévision à partir du volume d'eau chaude consommé mesuré.

14. Produit programme d'ordinateur téléchargeable depuis un réseau de communication et/ou stocké sur un support lisible par ordinateur comportant des instructions de code de programme pour l'exécution de la méthode de prévision de la consommation d'eau chaude selon l'une quelconque des revendications 1 à 13, lorsque le programme est exécuté par un processeur.

15. Support d'enregistrement lisible par un processeur sur lequel est enregistré un programme comportant des instructions de code de programme pour l'exécution de prévision de la consommation d'eau chaude selon l'une quelconque des revendications 1 à 13, lorsque le programme est exécuté par un processeur.

16. Méthode de production d'eau chaude pour une résidence équipée d'un réservoir d'eau chaude comprenant la production d'un volume d'eau chaude conformément à une prévision de consommation d'eau chaude élaborée à l'aide de la méthode de prévision de la consommation d'eau chaude selon l'une des revendications 1 à 13.

17. Méthode de production d'eau chaude selon la revendication 16 dans laquelle la production d'un volume d'eau chaude comprend l'activation ou la désactivation du chauffage de l'eau en fonction d'une comparaison, au cours du temps, entre une énergie équivalente stockée ($E_1$) dans le réservoir d'eau chaude et une énergie équivalente prédite ($E_2$) à partir de la prévision de consommation d'eau chaude.

18. Méthode de production d'eau chaude selon la revendication 17 dans laquelle la production d'un volume d'eau chaude comprend les étapes suivantes, exécutées itérativement :

   • Effectuer (501) au moins une mesure de température ($T_i$) à l'intérieur du réservoir d'eau chaude,
   • Calculer (502) une énergie équivalente stockée ($E_1$) au moins à partir de ladite au moins une mesure de température ($T_i$) et d'une température de consigne ($T_{consECS}$),
   • Calculer (504) une énergie équivalente prédite ($E_2$) à partir de la prévision de consommation d'eau chaude,
   • Calculer (505) la différence entre l'énergie équivalente stockée ($E_1$) et l'énergie équivalente prédite ($E_2$) et,

      - Si la différence est négative ou nulle, activer (507) le chauffage de l'eau du réservoir,
      - Si la différence est positive, désactiver (510) le chauffage de l'eau du réservoir.

19. Méthode de production d'eau chaude selon la revendication 18 dans laquelle la production d'un volume d'eau chaude comprend en outre les étapes de :

   • Si la différence calculée (505) est positive, vérifier (508) si le chauffage de l'eau du réservoir est activé et,
   • Si le chauffage de l'eau est activé et si la différence calculée est supérieure à un niveau d'énergie minimum

($\Delta E_{offset}$), désactiver (510) le chauffage de l'eau du réservoir.

20. Système (100) de production d'eau chaude comprenant un réservoir d'eau chaude (101), une mémoire (110) contenant un modèle de prévision de consommation d'eau chaude intra-journalière, pour chaque jour de la semaine, obtenu par l'exécution de la méthode de prévision de la consommation d'eau chaude selon l'une des revendications 1 à 13 , un moyen de chauffage de l'eau (108,109,108bis) dudit réservoir configuré pour chauffer une quantité d'eau prédéterminée à partir dudit modèle de prévision de consommation d'eau chaude.

21. Système (100) de production d'eau chaude selon la revendication 20 dans lequel le moyen de chauffage de l'eau (108,109,108bis) comprend au moins un dispositif de chauffage de l'eau (108), au moins un capteur de température (108bis) de l'eau contenue dans le réservoir et un dispositif de pilotage (109) ayant accès à la mémoire (110) et étant configuré pour mettre en oeuvre la méthode de production d'eau chaude selon l'une des revendications 16 à 19.

22. Système de production d'eau chaude selon l'une des revendications 20 ou 21 comprenant en outre un dispositif (107) de mesure de l'eau chaude consommée dans ledit réservoir et un dispositif (111) de réajustement du modèle de prévision de consommation d'eau chaude contenu dans la mémoire, configuré pour exécuter la méthode de prévision de la consommation d'eau chaude selon l'une des revendications 11 à 13.

FIG.1

$x_\tau$ → **201** → **202**

$y_{\tau,d}$    $Y_t$

**203**

$Z_{\tau,t}$

# FIG.2

FIG.3a

FIG.3b

FIG.4

FIG.5

Europäisches
Patentamt

European
Patent Office

Office européen
des brevets

# RAPPORT DE RECHERCHE EUROPEENNE

Numéro de la demande

EP 16 20 2190

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2015/121856 A1 (ZEMACH SHAI [IL]) 20 août 2015 (2015-08-20) * abrégé * * page 1, lignes 5-7 * * page 1, lignes 20-32 * * page 7, ligne 11 - page 8, ligne 6 * * page 9, ligne 12 - page 24, ligne 21 * | 1-22 | INV. G06Q10/04 G06Q50/06 F24D19/10 F24J2/00 H02J3/00 |
| X | US 2013/051777 A1 (BRIAN JOSEPH MARK [US] ET AL) 28 février 2013 (2013-02-28) * abrégé * * alinéas [0004] - [0008] * * alinéas [0014] - [0031] * * alinéa [0034]; figure 1 * * alinéas [0036] - [0050]; figures 2,3 * | 1-22 | |
| A | US 2004/102937 A1 (IBRAHIM MOHAMED M [IN]) 27 mai 2004 (2004-05-27) * abrégé * * alinéas [0002] - [0014] * | 1-22 | |
| A | US 2008/027885 A1 (VAN PUTTEN MAURITIUS H P M [US] ET AL) 31 janvier 2008 (2008-01-31) * abrégé * * alinéas [0023] - [0031] * * alinéas [0032] - [0036] * | 1-22 | DOMAINES TECHNIQUES RECHERCHES (IPC) G06Q H02J F24D F24J |
| A | JP 2007 219912 A (OSAKA GAS CO LTD) 30 août 2007 (2007-08-30) * abrégé * | 1-22 | |
| A | US 2015/226460 A1 (ZEMACH SHAI [IL]) 13 août 2015 (2015-08-13) * abrégé * * alinéa [0004] * * alinéas [0058] - [0065]; figure 2 * | 1,14,15, 20 | |

-/--

Le présent rapport a été établi pour toutes les revendications

| Lieu de la recherche | Date d'achèvement de la recherche | Examinateur |
|---|---|---|
| Munich | 8 mars 2017 | Dedek, Frédéric |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 16 20 2190

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JP 2005 265201 A (OSAKA GAS CO LTD) 29 septembre 2005 (2005-09-29) * abrégé * * alinéas [0030] - [0035] * * revendication 1 * | 1,14,15, 20 | |
| A | US 8 461 493 B1 (CANTOLINO CHRISTOPHER [US] ET AL) 11 juin 2013 (2013-06-11) * abrégé * * colonne 10, ligne 19 - colonne 12, ligne 20 * | 1,14,15, 20 | |
| A | US 2008/038604 A1 (MATSUBAYASHI SHIGEAKI [JP] ET AL) 14 février 2008 (2008-02-14) * abrégé * | 1,14,15, 20 | |
| A | SUGANTHI L ET AL: "Energy models for demand forecastingA review", RENEWABLE AND SUSTAINABLE ENERGY REVIEWS, ELSEVIERS SCIENCE, NEW YORK, NY, US, vol. 16, no. 2, 22 août 2011 (2011-08-22), pages 1223-1240, XP028356468, ISSN: 1364-0321, DOI: 10.1016/J.RSER.2011.08.014 [extrait le 2011-09-06] * abrégé * | 5 | |
| A | DEY RATUL ET AL: "Convex-hull & DBSCAN clustering to predict future weather", 2015 INTERNATIONAL CONFERENCE AND WORKSHOP ON COMPUTING AND COMMUNICATION (IEMCON), IEEE, 15 octobre 2015 (2015-10-15), pages 1-8, XP032823409, DOI: 10.1109/IEMCON.2015.7344438 [extrait le 2015-12-02] * abrégé * | 10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 8 mars 2017 | Dedek, Frédéric |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

........................................................................

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 16 20 2190

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-03-2017

| Document brevet cité au rapport de recherche | Date de publication | Membre(s) de la famille de brevet(s) | Date de publication |
|---|---|---|---|
| WO 2015121856 A1 | 20-08-2015 | AU 2015216566 A1<br>CA 2937874 A1<br>CN 105917172 A<br>EP 3105512 A1<br>SG 11201606236W A<br>WO 2015121856 A1 | 18-08-2016<br>20-08-2015<br>31-08-2016<br>21-12-2016<br>30-08-2016<br>20-08-2015 |
| US 2013051777 A1 | 28-02-2013 | AUCUN | |
| US 2004102937 A1 | 27-05-2004 | AU 2003300969 A1<br>US 2004102937 A1<br>WO 2004049080 A1 | 18-06-2004<br>27-05-2004<br>10-06-2004 |
| US 2008027885 A1 | 31-01-2008 | AUCUN | |
| JP 2007219912 A | 30-08-2007 | AUCUN | |
| US 2015226460 A1 | 13-08-2015 | AUCUN | |
| JP 2005265201 A | 29-09-2005 | AUCUN | |
| US 8461493 B1 | 11-06-2013 | AUCUN | |
| US 2008038604 A1 | 14-02-2008 | CN 1969419 A<br>EP 1780823 A1<br>JP 5020634 B2<br>US 2008038604 A1<br>WO 2006006445 A1 | 23-05-2007<br>02-05-2007<br>05-09-2012<br>14-02-2008<br>19-01-2006 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 100520190 C
- EP 2793097 A2
- US 4775944 A
- US 6098893 A
- US 20150226460 A1

**Littérature non-brevet citée dans la description**

- **U. JORDAN ; K.VAJEN.** *Realistic domestic hot-water profiles in different time scales,* Mai 2001, vol. 2.0
- **L. SUGANTHI ; A.A SAMUEL.** Energy models for demand forecasting - a review. *Renewable and sustainable energy reviews,* Octobre 2011
- **M. AYDINALP ; V. ISMET UGURSAL ; A.S. FUNG.** Modeling of the space and domestic hot-water heating energy-consumption in the residential sector using neural networks. *Applied Energy,* 05 Février 2004
- **T. PRUD'HOMME ; D. GILLET.** Advanced control strategy of a solar domestic hot water system with a segmented auxiliary heater. *Energy and Buildings,* 2001